Europäisches Patentamt

(19) European Patent Office

Office européen des brevets

(11) Publication number: **0 129 052**
. **B1**

(12) # EUROPEAN PATENT SPECIFICATION

(45) Date of publication of patent specification: 02.09.87

(51) Int. Cl.⁴: **H 01 F 41/02,** H 01 F 13/00, H 01 F 7/02

(21) Application number: 84105452.1

(22) Date of filing: 14.05.84

(54) Method of producing cylindrical permanent magnet.

(30) Priority: 20.05.83 JP 88962/83

(43) Date of publication of application:
27.12.84 Bulletin 84/52

(45) Publication of the grant of the patent:
02.09.87 Bulletin 87/36

(84) Designated Contracting States:
CH DE FR GB LI

(56) References cited:
EP-A-0 016 960
Patent Abstracts of Japan vol. 7, no. 49, 25
February 1983
Patent Abstracts of Japan vol. 5, no. 141, 5
September 1981 page 20E73
Patent Abstracts of Japan vol. 5, no. 44, 24
March 1981
Patent Abstracts of Japan vol.5 no.172 3I
October 1981 page 82M95

The file contains technical information
submitted after the application was filed and
not included in this specification

(73) Proprietor: Hitachi Metals, Ltd.
1-2, Marunouchi, 2-chome Chiyoda-ku
Tokyo 100 (JP)

(72) Inventor: Shimizu, Motoharu
519, Higashibeppu
Kumagaya-shi (JP)

(74) Representative: Strehl, Peter, Dipl.-Ing. et al
Strehl, Schübel-Hopf, Schulz Patentanwälte
Widenmayerstrasse 17 Postfach 22 03 45
D-8000 München 22 (DE)

EP 0 129 052 B1

## Description

### Background of the invention

The present invention relates to a method of producing a cylindrical magnet provided with an anisotropy by compacting in a magnetic field.

Nowadays, dynamic electric machines such as generators, motors and so forth incorporating a permanent magnet find various uses such as a motor for driving the magnetic disk of a computer and a motor for controlling the printer attached to the computer. For such uses, a motor called "PM type of stepping motor", having a rotor constituted by a multipole cylindrical permanent magnet, is most suitably used. In fact, there is an increasing demand for this type of motor, because of its excellent controllability. Usually, the cylindrical permanent magnet used in this motor has four or more poles, and rotors having magnetic poles greater than 8, e.g. 12, 24 or 36 poles, are becoming popular.

Hitherto, isotropic ferrite magnet has been used most popularly as the cylindrical permanent magnet of the kind described. This magnet, however, cannot provide satisfactory magnetic properties. For instance, a cylindrical permanent magnet of this type, having 24 poles and being 26 mm in outside diameter, exhibits a surface magnetic flux density Bo which is as small as 0.09 to 0.095T. A radially anisotropic ferrite magnet, produced by a process making use of rolling anisotropy, is proposed in, for example, Japanese Patent Application Laid-Open Publication No. 28899/74. This magnet also shows unsatisfactory magnetic properties due to the use of a binder agent for rolling and winding. For instance, a cylindrical permanent magnet of this type, having 24 poles and being 26 mm in outside dia., shows only a small surface magnetic flux density Bo of 0.095 to 0.105T.

On the other hand, various methods have been proposed for producing cylindrical permanent magnet having radial anisotropy. Examples of such methods are shown, for example, in Japanese Patent Application Laid-Open Publication No. 74907/81 or Japanese Patent Application Laid-Open Publication No. 98402/81. However, almost no study has been made up to now as to production methods for producing a permanent magnet having multipole surface anisotropy, and the present applicant is the only firm which produces this type of magnet on a mass production basis. The term "surface anisotropy" is used in this specification to mean such a state that the axes of easy magnetization are arrayed along the line (usually an arc) which connects the poles of opposite polarities existing on a same surface, e.g. the outer peripheral surface, of the cylindrical compact or magnet.

It has been thought that a permanent magnet having surface anisotropy may be produced by compacting conducted under the influence of a magnetic field. The thought method, however, cannot provide sufficiently high magnetic properties and tends to cause non-uniformity of the magnetic flux density along the length of each magnetic pole, unless a special compacting method is employed. In this type of permanent magnet, fluctuation in magnetic flux density in the order of 2% or less along the length of the magnetic pole does not matter substantially and, hence, is acceptable.

Japanese Patent Application Laid-Open Publication No. 199 205/82 discloses a method for producing a cylindrical permanent magnet as set forth in the first part of claim 1. There, wet ferromagnetic material containing 14 to 20% of water is first compacted, the wet compact is then subjected to a pulse magnetic field to achieve a magnetic anisotropy, and the compact is thereafter sintered.

It is an object of the present invention to provide a method of producing a cylindrical permanent magnet with surface anisotropy, ensuring superior magnetic properties and high uniformity of the magnetic flux density along the length of the magnetic poles.

This object is met by the method characterised in claim 1.

The above and other objects, features and advantages of the invention will become clear from the following description of the preferred embodiments when the same is read with reference to the accompanying drawings.

### Brief description of the drawings

Fig. 1 is a vertical sectional view of an example of a compacting apparatus suitable for use in carrying out the method of the invention;

Fig. 2 is a sectional view taken along the line II—II of Fig. 1;

Fig. 3 is an enlarged view of the portion marked at B in Fig. 2;

Fig. 4, shows a modification of the arrangement shown in Fig. 3;

Fig. 5 is a sectional view of an essential part of a compacting apparatus before compacting a powder in a conventional compacting method;

Fig. 6 is an illustration of the magnetic flux density distribution in a permanent magnet formed by the conventional compacting method as shown in Fig. 5;

Figs. 7 to 9 are sectional views of essential part of a compacting apparatus at each moment during the compacting according to the invention; and

Fig. 10 is a graph showing the relationship between the magnetic field intensity Bg of a permanent magnet and the thickness of a spacer which is used in the production of the magnet.

### Description of the preferred embodiments

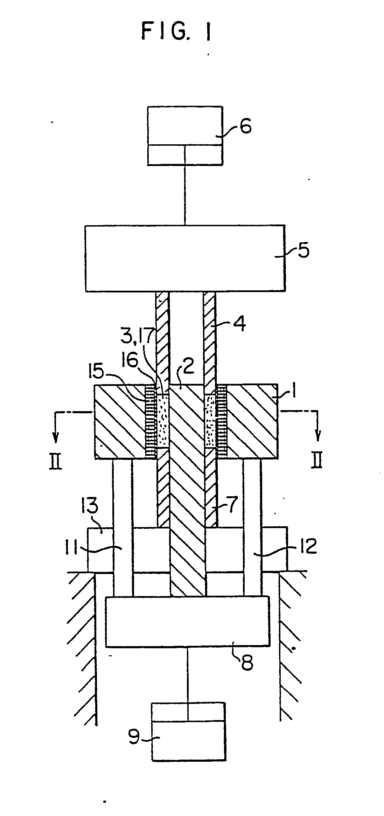

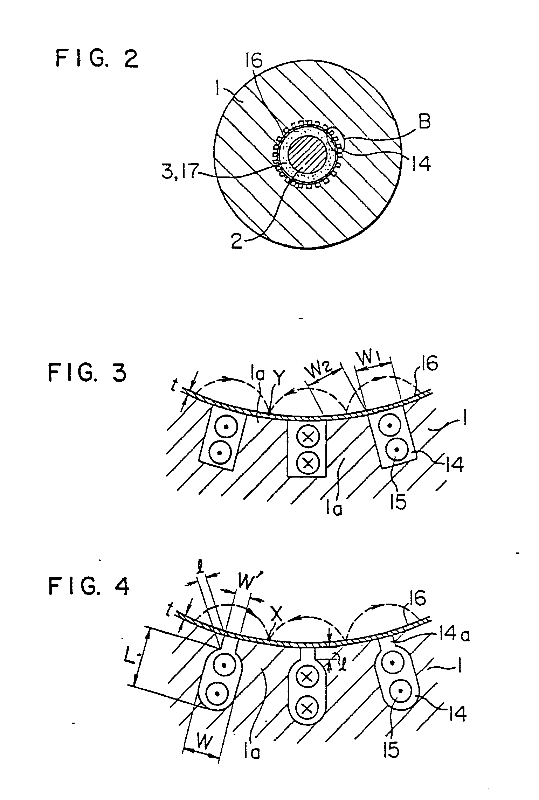

Referring first to Figs. 1 and 2, a die 1 made of a magnetic material is fixed to the lower frame 8 through pillars 11 and 12, while a core 2 made of a non-magnetic material is connected directly to the lower frame 8 which would be driven by a lower hydraulic cylinder 9. An upper punch made of a non-magnetic material and supported by an upper frame 5 is disposed to project into the upper end portion of the die 1. A hydraulic cylinder 6 receives a piston having a rod which is connected to the upper frame 5. On the other hand, a lower punch 7 made of a non-magnetic material is fixed to a base plate 13, and would be projected partially into the lower end portion of the die 1. The die 1, core 2, upper punch 4 and the lower punch 7 in combination constitute a metal mold having a compacting cavity 3 defined therein. The compacting cavity 3 is adapted to be charged with a ferromagnetic powder 17. As will be clearly seen from Fig. 2, a plurality of axial slots 14 are formed in the inner peripheral surface of the die 1 defining the compacting cavity 3. The number of the slots 14 is equal to the number of the magnetic poles to be formed, which is usually 8 (eight) or greater. Each slot 14 receives wires of coils for producing magnetic fields, as will be seen from Fig. 3. A ring-shaped spacer 16 made of a non-magnetic material is fitted on the inner peripheral surface of the die 1.

A cylindrical permanent magnet is produced by a method which will be explained hereinunder with specific reference to Fig. 1, using the apparatus described hereinbefore.

In the situation that the upper punch 4 is listed, the cavity 3 is charged with a ferromagnetic powder 17 such as powder of an Nd-Fe-B alloy, powder of alloy of rare earth metal and Co, Sr-ferrite powder or the like, by means of a suitable feeding device such as a vibration feeder. Then, the pulse electric current is applied to the coil 15 for producing magnetic field (referred to "field coil", hereafter) to magnetically orientate the ferromagnetic powder 17. Subsequently, the upper punch 4 is driven downwardly to compact the ferromagnetic powder 17 onto a cylindrical compact, while applying pulse electric current to the field coil 15. While maintaining the pressure on the compact, the pulse electric current the direction of which is reverse to that of the electric current supplied first is then applied to the field coil 15 to demagnetize the cylindrical compact. After removal from the metal mold, the cylindrical compact is fired or sintered and is processed into desired size. Finally, the cylindrical compact is magnetized in the same direction as the magnetic anisotropy, so that a cylindrical permanent magnet having a multipole surface anisotropy is obtained.

The present inventor has carried out various researches on the aforementioned production method, and as a result it was found that by the construction mentioned hereinafter a cylindrical permanent magnet having superior magnetic properties and uniformity of magnetic flux density in axial direction (hereafter, referred to merely "linearity") can be obtained. Firstly, with reference to the magnetic properties of the permanent magnet to be obtained, a high magnetic field intensity $Bg$ in the compacting cavity is indispensable for obtaining a large surface magnetic flux density $Bo$. However, if the number of the magnetic poles is increased (e.g. 24 poles or more), the volume of each slot 14 for receiving the field coil becomes smaller, so that the number of turns of coil which can be received in each slot is naturally limited to several turns. Accordingly, in order to obtain sufficiently high magnetic field intensity with field coils of such a small number of turns, it is necessary to increase the level of the electric current supplied to the field coils. For instance, if each field coil has two turns, it is necessary to supply a large electric current of 8,000 to 15,000 A in order to produce a magnetic field of $8 \times 10^3$ to $15 \times 10^3$ ampere-turns/m. It would be practically impossible, however, to deal with such a large electric current in this type of apparatus unless suitable measures are taken to remove the heat which would be produced in the coil by the electric current. To obviate this problem, the present inventor has carried out various researches and found that a permanent magnet having a surface magnetic flux density $Bo$ of 0.15 T or greater can be obtained by supplying the field coil with such pulse electric current that the magnetic field intensity becomes $3.5 \times 10^3$ ampere-turns/m or greater. In this case, the pulse magnetic field may be applied not only one time but also several times.

Further, the construction of magnetic circuit in the metal mold is important for attaining the required surface magnetic flux density $Bo$ as mentioned above as well as the multipole surface anisotropy. Namely, from the view point of the magnetic properties, the metal mold shown in Fig. 3 having coil-receiving slots 14 formed directly in the inner peripheral surface of the die 1 is quite effective. However, the formation of a large number of slots for multipole encounters the following problem. Namely, when a large number of axial slots are formed in the inner peripheral surface of the die 1, the circumferential width of each land portion 1a separating adjacent slots 14 becomes extremely small. Such land portions having small width may fail to withstand the large compacting pressure and may become worn down rapidly. The compacting pressure usually ranges between 0.5 and 1 ton/cm² and the lateral pressure acting on the die and the core falls within the range of 0.1 to 0.4 ton/cm² (Rankine coefficient assumed to be 0.2 to 0.4), in the case of production of ferrite type of cylindrical permanent magnet. The present inventor has carried out various researches and as a result found that this problem can be overcome by fitting a ring-shaped spacer 16 made of a non-magnetic material onto the inner peripheral surface of the metal mold. When the spacer is used, however, the intensity of effective magnetic flux reaching the surface of the compact is inconveniently decreased as the thickness $t$ of the spacer is increased (in Figs. 3 and 4, the chain line represents the path of magnetic flux). The thickness $t$, therefore, would be selected to meet the following condition:

$$t < \pi \cdot d/3 \cdot M$$

where, $d$ represents the inside diameter of the spacer, while $M$ represents the number of magnetic poles.

3

Fig. 4 shows a modification of the coil-receiving slots 14. In this case, each slot 14 has a greater radial depth from the inner peripheral surface of the core than that in the construction shown in Fig. 3, and opens to the inside of the core 1 through a restricted opening 14a. Consequently, the land portion 1a between adjacent slots 14, constituting a magnetic pole, has a large circumferential width to exhibit greater mechanical strength and wear resistance. In order to minimize the reduction in the intensity of effective magnetic flux reaching the surface of the compact, the thickness $t$ of the spacer 14 should be selected to meet the above-mentioned condition also in the construction shown in Fig. 4. In the construction shown in Fig. 4, the restricted opening 14a is preferably as small as possible, in order to attain higher mechanical strength and wear resistance of the land portion. In such a case, however, the magnetic flux will tend to short-circuit between the adjacent land portions to undesirably decrease the intensity of magnetic flux reaching the surface of the compact. It would be possible to eliminate this problem by supplying a large pulse electric current to the field coils to magnetically saturate the short-circuiting portion. Preferably, in Figs. 3 and 4 after inserting the field coil 14 into the coil-receiving slot 14, the slot is filled with a reinforcing material such as an epoxy resin, composite filler or the like by means of, for example, vacuum impregnation, thereby increasing the strength and the wear resistance of the metal mold.

The application of the pulse magnetic field can be made by connecting the field coil to, for example, an instantaneous D.C. power source having a transformer/rectifier for transforming and rectifying the commercial A.C. power into a D.C. voltage of, for example, about 700 V, the capacitors each having a capacitance of, for example, $4 \times 10^4$ μF and being adapted to be charged with the D.C. voltage and a thyristor through which the capacitor make a discharge.

High magnetic flux density and high uniformity or linearity of magnetic flux density along the length of the magnetic pole are the essential factors for attaining the desirable multipole surface anisotropy. The present inventor has found, through various experiments and study, that a high linearity of the magnetic flux density can be obtained when the compacting is conducted in a manner mentioned below.

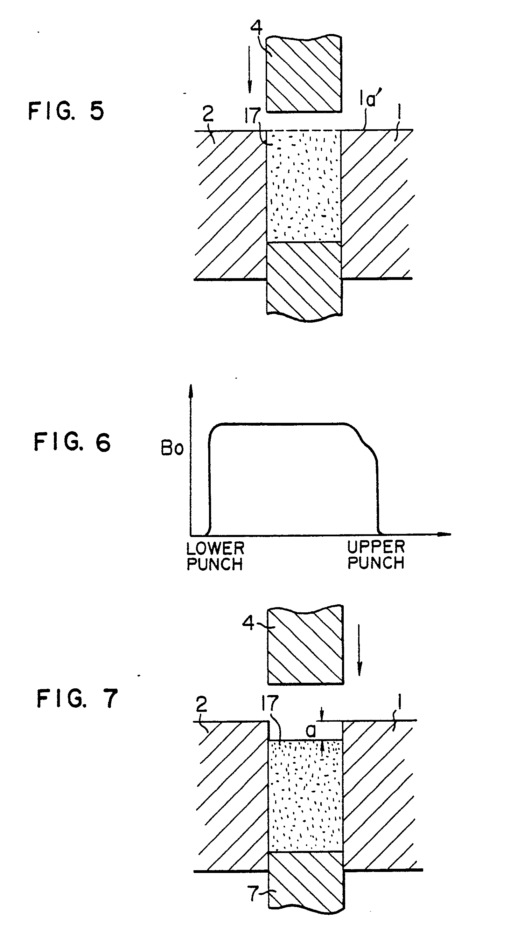

In the ordinary compacting method, as shown in Fig. 5, the cylindrical compact is formed by putting the ferromagnetic powder 17 into the compacting cavity and driving the upper punch 4 downwardly to compact the ferromagnetic powder, while applying pulse magnetic field to impart the anisotropy. As the magnetic flux between adjacent land portions on the upper end surface 1a' of the die 1 is irregular, the anisotropy is decreased in the upper portion of the compact. Fig. 6 shows the axial magnetic flux density distribution on each magnetic pole of a cylindrical permanent magnet which is produced by subjecting the cylindrical compact formed by the method shown in Fig. 5 to firing and magnetization. As will be seen from this Figure, the anisotropy is decreased in the portion of the magnet near the upper punch, so that the linearity of the magnetic flux density is impaired.

According to the invention, however, it is possible to eliminate such problem in the permanent magnet as shown in Fig. 5, by lifting the die 1 to form a vacant space of a height $a$ as shown in Fig. 7 after charging the compacting cavity with the ferromagnetic powder 17 as shown in Fig. 5, before driving the upper punch 4 downwardly.

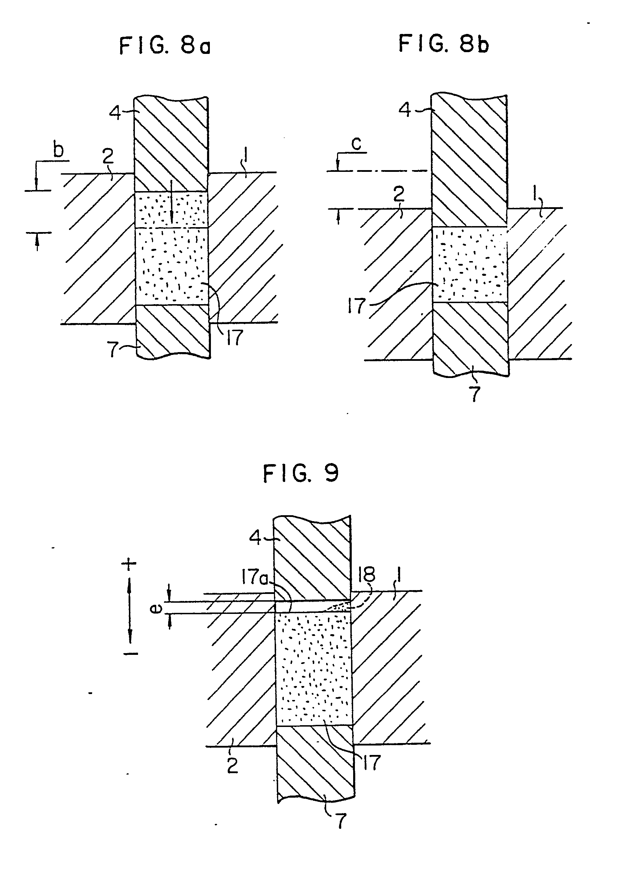

In order that the pulse magnetic field produced by the field coil is applied uniformly to the mass of ferromagnetic powder, it is advisable as shown in Fig. 8b to conduct the compacting while lowering the die 1 and the core 2 by a distance $C$ which is substantially equal to the distance $b$ (see Fig. 8a) travelled by the upper punch 4 after the latter is brought into contact with the ferromagnetic powder up to the completion of the compacting.

It is also advisable that the application of the pulse magnetic field is conducted immediately after the commencement of contact of the upper punch 4 with the ferrogmagnetic powder. If the pulse magnetic field is applied while a gap $e$ is still left between the upper punch 4 and the ferromagnetic powder, as shown in Fig. 9 part 18 of the magnetic powder adjacent to the upper punch will be magnetically attracted to the die thereby disturbing the orientation. Incidentally, Figs. 5 and 7 to 9 show the operation of the metal mold only schematically, so that the ring-shaped spacer and the magnetic coils are omitted from these Figures.

Although in the described embodiment the multipole anisotropy is given only to the outer peripheral surface of the cylindrical permanent magnet, this is not exclusive and, in some uses of the cylindrical permanent magnet, it is required to impart the multipole surface anisotropy to the inner peripheral surface of the cylindrical permanent magnet. It will be clear to those skilled in the art that the multipole anisotropy on the inner peripheral surface of the cylindrical permanent magnet can be attained by using a metal mold in which the core shown in Fig. 1 is made of a magnetic material and is provided with coil-receiving slots, with the similar magnetic circuit arrangement as that shown in Figs. 2 to 4.

Example 1

A ferromagnetic powder was prepared by adding 1 wt% of calcium stearate to Sr-ferrite powder having a mean particle size of about 1 μm. Using a compacting apparatus incorporating the metal mold as shown in Fig. 4, the powder was compacted at a pressure of 700 bar under the application of pulse magnetic fields, and a cylindrical compact having an outside diameter of 40.8 mm, inside diameter of 29.1 mm and a length of 41 mm (density 2.8 g/cm³) was obtained. After firing at 1200°C, this cylindrical compact was processed into a size of an outside diameter of 33 mm, inside diameter of 24 mm and length of 35 mm and was magnetized to have 24 poles thereby obtaining a cylindrical permanent magnet. In this case, the

0 129 052

thickness $t$ of the spacer 16, distance $l$ between the inner peripheral surface of the die 1 and the coil-receiving slot 14, and the width W' of the restricted opening of the slot were selected to be 0.5 mm, respectively. The width W and length L of the slot 14 were selected to be 2.7 mm and 5.5 mm, respectively.

Table 1 shows the result of a test conducted to seek for the relationship between the magnetic field intensity Bg at position X in Fig. 4 and the surface magnetic flux density Bo under various input currents to the field coils.

TABLE 1

| Bg (ampere-turns/m$\times 10^3$) | 2.8 | 3.5 | 4.0 | 4.7 | 5.3 |
|---|---|---|---|---|---|
| Bo (T) | 0.140 | 0.150 | 0.158 | 0.160 | 0.160 |

From Table 1 above, it will be understood that a magnetic field intensity Bg of $3.5\times 10^3$ ampere-turns/m is necessary for obtaining the surface magnetic flux density Bo of 0.15 T or higher.

Example 2

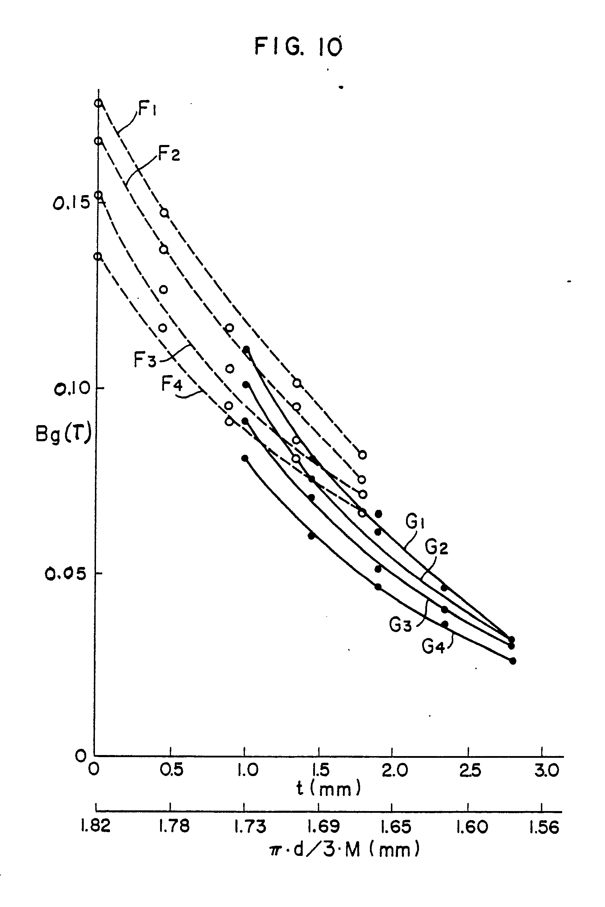

With the metal molds shown in Figs. 3 and 4, a test was conducted by using various thicknesses of the spacer to seek for the relationship between the thickness $t$ of the spacer and the magnetic field intensity Bg (at portion Y in case of Fig. 3, at position in case of Fig. 4) and the result of which is shown in Fig. 10. The outside diameter of the spacer was 41.8 mm, while the number M of the magnetic pole was 24. In Fig. 10, the broken-line curves $F_1$ to $F_4$ show the results as obtained when the compacting is conducted with the metal mold shown in Fig. 3 (wherein $W_1=W_2$). The curve $F_1$ shows the result as obtained with the magneto-motive force of 4.42 (unit: $10^3$ ampere-turns). Similarly, the curves $F_2$, $F_3$ and $F_4$ show the results as obtained with the magnetomotive forces of 5.34, 6.27 and 7.22. Curves $G_1$ to $G_4$ show the results as obtained with the mold shown in Fig. 4 (wherein $W_1=W_2=5.5$ mm, $W_1'=0.5$ mm and $l=0.5$ mm). The curve $G_1$ was obtained when the magnetomotive force was selected to be 4.85 (unit: $10^3$ ampere-turns). Similarly, curves $G_2$, $G_3$ and $G_4$ correspond to magnetomotive force of 5.91, 6.94 and 8.00. As will be clearly understood from Fig. 10, the magnetic field intensity Bg is largely decreased when the thickness $t$ of the ring-shaped spacer exceeds $\pi \cdot d/3 \cdot M$, so that the permanent magnet having the desired surface magnetic flux density Bo cannot be obtained.

Example 3

With the arrangement and condition explained in connection with Example 1, a comparison was made between the case (a) where pulse magnetic field was applied only before the commencement of compacting of the ferromagnetic powder and the case (b) where the pulse magnetic field was applied after the commencement of compacting of the ferromagnetic powder, and the results of which are shown in Table 3. The height $a$ in the compacting cavity shown in Fig. 7 and the distance $C$ shows in Fig. 8b were selected to be 20 mm at each case. The application of the pulse magnetic field was consecutively made for 5 times in each of the cases (a) and (b).

TABLE 3

| Magnetic field applying condition | Bo (T) | | | Finishing allowance of magnet after firing |
|---|---|---|---|---|
| | Upper-punch side | Center | Lower-punch side | |
| (a) | 0.1627 | 0.1398 | 0.1631 | 1.0 mm |
| (b) | 0.1737 | 0.1738 | 0.1702 | 0.6 mm |

(Note) Bg was maintained at $4.7\times 10^3$ ampere-turns/m.

As shown in Table 3 above, it will be understood that preferably the application of the pulse magnetic field could be conducted during the compacting for obtaining the high linearity of the surface magnetic flux density.

Example 4

Using the arrangement and condition explained in connection with Example 1, the surface magnetic flux density Bo was measured while changing the height $a$ in Fig. 7. The pulse magnetic field was applied consecutively for 5 times during the compacting, at the intensity Bg of $4.7\times 10^3$ ampere-turns/m and selecting the distance $C$ shown in Fig. 8 to be 20 mm. The result of this test is shown in Table 4. The finishing allowance after the sintering was selected to be 1.3 mm in diameter in each case.

5

**0 129 052**

TABLE 4

| a (mm) | Bo (T) | |
|---|---|---|
| | Upper-punch side | Lower-punch side |
| 0 | 0.132 | 0.165 |
| 2 | 0.140 | " |
| 5 | 0.160 | " |
| 10 | 0.165 | " |
| 20 | 0.165 | " |

As will be understood from Table 4, the value of surface magentic flux density Bo in the upper-punch side is increased as the height *a* is increased, and becomes equal to that in the lower-punch side when the height *a* is increased to 10 mm or larger. From this fact, it will be understood that the linearity can be improved by raising the die again after filling up the compacting cavity with the ferrogmagnetic powder material.

Example 5

Cylindrical permanent magnets were produced under the same condition as Example 4 except that the height *a* shown in Fig. 7 was selected to be 20 mm and that the distance *C* in Fig. 8 was changed. The result of this test is shown in Table 5.

TABLE 5

| b (mm) | C (mm) | Bo (T) | |
|---|---|---|---|
| | | Upper-punch side | Lower-punch side |
| 40 | 0 | 0.163 | 0.167 |
| 35 | 5 | 0.163 | 0.167 |
| 30 | 10 | 0.164 | 0.166 |
| 20 | 20 | 0.165 | 0.165 |

As will be clearly understood from Table 5, the difference in the surface magnetic flux density Bo between the upper-punch side and the lower-punch side are decreased as the difference between the distance *C* and the downward stroke *b* of the upper punch becomes smaller. The difference in the surface magnetic flux density Bo between the upper-punch side and the lower-punch side becomes zero when the distance *C* becomes equal to the downward stroke *b* of the upper punch.

Example 6

Cylindrical permanent magnets were produced under the same condition as Example 5, except that the height *a* shown in Fig. 7 and the distance *C* shown in Fig. 8 were selected to be 20 mm and that the gap *e* shown in Fig. 9 was varied. The surface magnetic flux density Bo was measured to obtain the result as shown in Table 6.

6

**0 129 052**

TABLE 6

| e (mm) | Bo (T) | |
| --- | --- | --- |
| | Upper-punch side | Lower-punch side |
| 5 | 0.163 | 0.165 |
| 0 | 0.165 | " |
| -2 | 0.165 | " |
| -5 | 0.155 | " |
| -10 | 0.140 | " |

As will be seen from Table 6 above, the surface magnetic flux density Bo in the upper-punch side of the magnet is disturbed as the size of the gap e is increased. It is, therefore, advisable to apply the pulse magnetic field almost simultaneously with the commencement of contact between the upper punch and the material powder.

Incidentally, the values of the surface magnetic flux density Bo in the described Examples are the mean of the values obtained for 24 magnetic poles.

As has been described, according to the invention, it is possible to obtain a cylindrical permanent magnet with a multipole surface anisotropy, exhibiting superior magnetic properties and good linearily in the surface magnetic flux density.

**Claims**

1. A method of producing a cylindrical permanent magnet, comprising
   compressing ferromagnetic material (17) to form a cylindrical compact,
   energizing a magnetic field means (15) to produce a pulse magnetic field, thereby to impart a surface magnetic anisotropy of more than eight poles to said ferromagnetic material (17),
   demagnetizing the formed compact followed by firing, and
   magnetizing the fired compact in the same direction as the imparted anisotropy,
   characterised in
   that a metal mold (1, 2) cooperating with a lower punch (7) is prepared to define a cylindrical compacting cavity (3) which mold is at its inner peripheral surface provided with said magnetic field means (15),
   that said ferromagnetic material is charged into said compacting cavity (3) as a powder (17),
   that said magnetic field is applied to said powder (17) while the same is being compacted, and
   that said magnetic field is produced with an intensity of no less than $3.5 \times 10^3$ Ampere-turns/m as measured at the outer-peripheral surface of said compacting cavity (3).

2. The method of claim 1, wherein a ring-shaped spacer (16) made of a non-magnetic material is fitted on the inner surface of said metal mold (1, 2).

3. The method of claim 2, wherein the thickness t of said ring-shaped spacer (16) is selected to meet the following condition:

$$t < \pi \cdot d/3 \cdot M$$

where d represents the inside diameter of said spacer (16), while M represents the number of poles.

4. The method of any of claims 1 to 3, wherein said metal mold (1, 2) is lifted by a predetermined amount after filling said compacting cavity (3) with said ferromagnetic powder (17), and said pulse magnetic field is applied after an upper punch (4) is brought into contact with said ferromagnetic powder (17) during its downward stroke.

5. The method of any of claims 1 to 4, wherein said ferromagnetic powder (17) is compacted by both of said upper and lower punches (4, 7) by substantially equal amounts of compressions.

6. The method of any of claims 1 to 5, wherein said compact has an outside diameter of not smaller than 30 mm and is formed mainly of $MO \cdot nFe_2O_3$, where M represents one, two or more of Ba, Sr and Pb, while n represents an integer which is 5 or 6.

7. The method of any of claims 1 to 6, wherein said cylindrical permanent magnet has a coercive force of $1.6 \cdot 10^5$ A/m or greater, and a reversible magnetic permeability of about 1.

8. The method of any of claims 1 to 7, wherein said cylindrical permanent magnet has a multipole anisotropy of 24 or more poles in the surface thereof.

7

**Patentansprüche**

1. Verfahren zur Herstellung eines zylindrischen Dauermagneten, wobei ferromagnetisches Material (17) komprimiert wird, um einen zylindrischen Preßkörper zu bilden, eine Magnetfeldeinrichtung (15) zur Erzeugung eines pulsierenden Magnetfeldes erregt wird, um dem ferromagnetischen Material (17) eine magnetische Oberflächen-Anisotropie mit mehr als 8 Polen zu erteilen, der erzeugte Preßkörper entmagnetisiert und anschließend gebrannt wird, und der gebrannte Preßkörper in der gleichen Richtung wie die ihm erteilte Anisotrope magnetisiert wird, dadurch gekennzeichnet, daß eine mit einem unteren Stempel (7) zusammenwirkende Metallform (1, 2) vorbereitet wird, die einen zylindrischen Preß-Hohlraum (3) definiert, wobei die Form in ihrer inneren Umfangsfläche mit der Magnetfeldeinrichtung (15) versehen ist, daß das ferromagentische Material als Pulver (17) in den Preß-Hohlraum (3) eingebracht wird, daß das Magnetfeld während des Pressens des Pulvers (17) an dieses angelegt wird, und daß das Magnetfeld mit einer Intensität von mindestens $3{,}5 \times 10^3$ Amperewindungen/m, gemessen an der äußeren Umfangsfläche des Preß-Hohlraums (3) erzeugt wird.

2. Verfahren nach Anspruch 1, wobei die Innenfläche der Metallform (1, 2) mit einem ringförmigen Abstandselement (16) aus nicht-magnetischem Material versehen wird.

3. Verfahren nach Anspruch 2, wobei die Dicke t des ringförmigen Abstandselements (16) so gewählt wird, daß sie die folgende Bedingung erfüllt:

$$t < \pi \cdot d/3 \cdot M$$

wobei d den Innendurchmesser des Abstandselements (16) und M die Anzahl der Pole angibt.

4. Verfahren nach einem der Ansprüche 1 bis 3, wobei die Metallform (1, 2) nach Füllen des Preß-Hohlraums (3) mit dem ferromagnetischen Pulver (17) um ein vorgegebenes Maß angehoben und das pulsierende Magnetfeld angelegt wird, nachdem ein oberer Stempel (4) beim Abwärtshub in Berührung mit dem ferromagnetischen Pulver (17) gebracht worden ist.

5. Verfahren nach einem der Ansprüche 1 bis 4, wobei das magnetische Pulver (17) durch den oberen und den unteren Stempel (4, 7) mit im wesentlichen gleicher Verdichtung gepreßt wird.

6. Verfahren nach einem der Ansprüche 1 bis 5, wobei der Preßkörper einen Außendurchmesser von mindestens 30 mm aufweist und hauptsächlich aus $Mo \cdot nFe_2O_3$ gebildet wird, wobei M eines, zwei oder mehrere der Elemente Ba, Sr und Pb und n eine ganze Zahl von 5 oder 6 angibt.

7. Verfahren nach einem der Ansprüche 1 bis 6, wobei der zylindrische Dauermagnet eine koerzitive Kraft von $1{,}6 \times 10^5$ A/m oder mehr und eine reversible magnetische Permeabilität von etwa 1 aufweist.

8. Verfahren nach einem der Ansprüche 1 bis 7, wobei der zylindrische Dauermagnet eine mehrpolige Anisotropie mit 24 oder mehr Polen an seiner Oberfläche aufweist.

**Revendications**

1. Une méthode de fabrication d'un aimant cylindrique permanent comportant:
la compression d'un matériau ferromagnétique (17) pour former un compact cylindrique,
l'alimentation d'un dispositif de champ magnétique (15) pour produire une impulsion de champ magnétique, ce qui a pour résultat de donner une anisotropie magnétique de surface de plus de huit pôles audit matériau ferromagnétique (17),
la démagnétisation du compact fabriqué suivie de sa cuisson et
la magnétisation du compact cuit, dans la même direction que celle de l'anisotropie transmise, caractérisée par le fait
qu'un moule métallique (1, 2), dont le fonctionnement est lié à un poinçon bas (7), est préparé de manière à définir une cavité de compactage cylindrique (3), ledit moule étant muni, sur sa surface périphérique intérieure, dudit dispositif de champ magnétique (15),
que ledit matériau ferromagnétique est chargé dans ladite cavité de compactage (3) sous forme de poudre (17),
que ledit champ magnétique est appliqué à ladite poudre (17), alors même que celle-ci est soumise à l'opération de compactage, et
que ledit champ magnétique est produit avec une intensité non inférieure à $3{,}5 \times 10^3$ ampères-tours/m, mesurée à la surface périphérique extérieure de ladite cavité de compactage (3).

2. La méthode telle que revendiquée à la revendication 1, dans laquelle une entretoise annulaire (16) en matériau non magnétique est fixée sur la surface intérieure dudit moule métallique (1, 2).

3. La méthode telle que revendiquée à la revendication 2, dans laquelle l'épaisseur t de l'entretoise annulaire (16) doit répondre à la condition suivante:

$$t < \pi \cdot d/3 \cdot M$$

où d représente le diamètre intérieur de ladite entretoise (16), alors que M représente le nombre de pôles.

4. La méthode selon l'une quelconque des revendications 1 à 3, dans laquelle le moule métallique (1, 2) est relevé d'une hauteur prédéterminée, après remplissage de ladite cavité de compactage (3) avec ladite poudre ferromagnétique (17), et ladite impulsion de champ magnétique est appliquée après qu'un poinçon haut (4) a été mis en contact avec ladite poudre ferromagnétique (17) pendant sa course descendante.

5. La méthode selon l'une quelconque des revendications 1 à 5, dans laquelle ladite poudre ferromagnétique (17) est comprimée à la fois par lesdits poinçons haut et bas (4, 7), avec des forces de compression substantiellement égales.

6. La méthode selon l'une quelconque des revendications 1 à 5, dans laquelle ledit compact a un diamètre extérieur non inférieur à 30 mm et est principalement formé de $MO \cdot nFe_2O_3$, où M représente un, deux ou plus de Ba, Sr et Pb, alors que n représente un nombre entier qui est 5 ou 6.

7. La méthode selon l'une quelconque des revendications 1 à 6, dans laquelle ledit aimant cylindrique permanent a une force coercitive de $1,6 \times 10^5$ A/m ou plus, et une perméabilité magnétique réversible d'environ 1.

8. La méthode selon l'une quelconque des revendications 1 à 7, dans laquelle ledit aimant cylindrique permanent à une anisotropie de surface de 24 pôles ou plus sur sa surface même.

0 129 052

FIG. 1

1

FIG. 2

FIG. 3

FIG. 4

FIG. 5

FIG. 6

Bo

LOWER
PUNCH

UPPER
PUNCH

FIG. 7

## FIG. 8a

## FIG. 8b

## FIG. 9

FIG. 10